# EUROPÄISCHE PATENTSCHRIFT

(11) **EP 1 526 960 B1**
(45) Veröffentlichungstag und Bekanntmachung des Hinweises auf die Patenterteilung: **05.09.2007**
(21) Anmeldenummer: 03735622.7
(22) Anmeldetag: 13.06.2003
(51) Int. Cl.: B29C 47/90, B32B 37/15

(54) **VERFAHREN ZUR HERSTELLUNG VON NIEDRIG ORIENTIERTEN THERMOPLASTISCHEN FOLIEN, DIE HERGESTELLTE FOLIE UND IHRE VERWENDUNG**
METHOD FOR THE PRODUCTION OF LOW ORIENTATION THERMOPLASTIC FILM, THE FILM PRODUCED THUS AND USE THEREOF
PROCEDE DE FABRICATION DE FEUILLES THERMOPLASTIQUES A FAIBLE ORIENTATION, FEUILLES AINSI FABRIQUEES ET UTILISATION DE CES DERNIERES

(30) Priorität: 06.08.2002 DE 10236045
(43) Veröffentlichungstag der Anmeldung: 04.05.2005
(73) Patentinhaber: Röhm GmbH, 64293 Darmstadt (DE)
(72) Erfinder: NUMRICH, Uwe, 64846 Gross-Zimmern (DE); LORENZ, Hans, 64291 Darmstadt (DE); GROOTHUES, Herbert, 64331 Weiterstadt (DE)
(86) Internationale Anmeldenummer: PCT/EP2003/006237
(87) Internationale Veröffentlichungsnummer: WO 2004/014634

(56) Entgegenhaltungen:
- WO-A-01/45915
- WO-A-99/29766
- US-A- 5 234 652
- US-A- 5 242 737
- US-A- 5 286 436
- US-A- 5 554 246
- US-A- 5 772 944
- US-A- 5 807 516
- US-B1- 6 280 808
- PATENT ABSTRACTS OF JAPAN vol. 1995, no. 08, 29. September 1995 (1995-09-29) & JP 07 117124 A (MITSUBISHI CHEM CORP), 9. Mai 1995 (1995-05-09)

## Beschreibung

### Gebiet der Erfindung

Die Erfindung betrifft niedrig orientierte thermoplastische Folien.

### Stand der Technik

DE 38 42 796 (Röhm GmbH) beschreibt Polymethylmethacrylat (PMMA)-Folien auf Basis von PMMA-Formmassen mit niedriger Elastomerteilchengröße und hohem Elastomeranteil. Diese Anmeldung beschreibt ein Chill-Roll-Verfahren, bei der der aus der Extrusionsdüse austretende Schmelzefilm über eine einzelne Walze abgenommen und gekühlt wird.

WO 96/30435 und EP 763 560 (Mitsubishi Rayon) beschreiben die Herstellung von bis zu 0,3 mm dicken PMMA-Folien, basierend auf einer bestimmten PMMA-Zusammensetzung: ein Schlagzähmodifier auf der Basis von Polybutylacrylat mit bestimmten Partikeldurchmesser sowie PMMA-Matrixpolymer III und die (optionsweise) Zugabe eines Schmelzfestigkeitsmodifiers (Polymer I).

Die Herstellung der Folie erfolgt mittels einem 1-Walzenprozeß (sog. Chill-Roll-Schmelzegießprozess), bei dem die thermoplastische Schmelze während dem Abkühl- und Verfestigungsprozess mit einer einzelnen Metallwalze in Kontakt gebracht und abgekühlt wird. Es wird ausdrücklich darauf hingewiesen, dass die thermoplastische Schmelze zur Herstellung von Folien des beanspruchten Dickenbereichs nicht zwischen zwei Metallwalzen geformt werden kann.

Dieses Verfahren weist gegenüber dem 2-Walzenprozeß bedeutende Nachteile auf, welche entscheidenden Einfluss auf die Folienqualität nehmen. Gelkörper, zu deren Ausbildung schlagzäh-modifizierte PMMA-Formmassen grundsätzlich neigen, werden bei der Formgebung auf der einzelnen Chill-Roll-Walze, im Gegensatz zum 2-Walzen(Glätt)prozess nicht unter die Folienoberfläche gedrückt und bleiben somit als optischer Defekt sichtbar. Besonders nachteilig wirkt sich dies im nachfolgenden Druckprozess zur Herstellung von Dekorfolien aus, bei dem sich deutlich sichtbare Fehlstellen im Bereich der Gelkörper aufzeigen. Ferner weist die der Chill-Roll-Walze entgegengesetzte, frei an der Luft abkühlende Folienoberfläche eine merkliche Oberflächentrübung auf, die sich aus der unterschiedlich starken Volumenkontraktion der Elastomerteilchen und der PMMA-Matrix ergibt. Hierdurch wird eine ausgeprägte "Berg und Tal"-Oberflächenstruktur erzeugt, die das Licht streut und somit einen nachteiligen Trübungseffekt hervorruft.

DE 195 44 563 (Röhm GmbH) beschreibt die zur Herstellung der erfindungsgemäßen Folien eingesetzten schlagzähen PMMA-Formmassen. (nicht gestrichen)

DE 40 18 530 (Röhm GmbH) beschreibt ein Verfahren zur Herstellung von Vollplatten oder Folien mit weniger als 1 mm Dicke aus einem thermoplastischen Kunststoff mit einer Glasübergangstemperatur > 50°C. Die Glättung wird durch eine Führung der Folie auf einem Endlosband erreicht. Die erhaltenen Platten oder Folien sind praktisch frei von Orientierungen und Doppelbrechung.

EP 659 829 (Röhm GmbH) beschreibt eine Witterungsschutzfolie und damit beschichtete Formkörper, die Folie hat neben dem Schutz vor der Witterung auch die Aufgabe, UV-Strahlen zu absorbieren. Sie besteht aus einer Hartphase aus PMMA und einer Zähphase, wobei sich der UV-Absorber in der Hartphase befindet.

EP 391 193 (Bayer AG) beschreibt ein Verfahren zur Herstellung beidseitig glänzender, optisch isotroper Extrusionsfolien mit einer Dicke kleiner als 0,6 mm, welche entweder
1. durch Extrusion und anschließender Kalandrierung zwischen einer lackierten elastischen Walze und einer hochglänzenden Stahlwalze hergestellt oder
2. in zwei Extrusionsschritten geformt werden, wobei im ersten Schritt eine auf der einen Seite hochglänzende und auf der anderen Seite matte Folie durch Extrusion und anschließende Kalandrierung zwischen einer geschliffenen elastischen Walze und einer hochglänzenden Stahlwalze hergestellt werden. In einem zweiten Extrusionsschritt wird die im ersten Schritt hergestellte Folie mit der Schmelze des gleichen thermoplastischen Kunststoffs auf der matten Seite der Folie beschichtet, diese erhaltene beschichtete Folie wird nochmals zwischen einer hochglänzenden Stahlwalze und einer geschliffenen elastischen Walze kalandriert, wobei die hochglänzende Seite der beschichteten Folie zur Walze aus geschliffenen elastischen Material zeigt.

Verfahren 1 weist den Nachteil auf, dass es großtechnisch nicht realisierbar ist, da die Lackschichten auf den Gummiwalzen unter dem Einfluss der hohen Schmelztemperatur sehr schnell verspröden. Um den Einfluss der hohen Schmelztemperaturen zu vermindern, können die lackierten Gummiwalzen in einem Wasserbad gekühlt werden, die Feuchte führt jedoch zu einer nachteiligen Beeinflussung der Oberflächenqualität der Folie.

Verfahren 2 weist eine äußerst ungünstige Wirtschaftlichkeit auf, da die Folienherstellung in zwei Extrusionsschritten durchgeführt werden muss. Ferner führt die Extrusionsbeschichtung einer Folie mit Schmelze und die nachfolgende Kalandrierung, insbesondere im erfindungsgemäß beanspruchten Dickenbereich, zu ungünstigen Oberflächeneigenschaften.

EP 165 075 (Exxon) beschreibt ein Verfahren zur Herstellung einer beidseitig glänzenden Folie aus 10-85 Gew.-% eines Elastomers und 90 - 15 Gew.-% eines Polyolefins, in dem man die extrudierte Bahn bei einer Temperatur über ihren Erweichungspunkt durch den Spalt von gegenläufigen Walzen führt. Eine der Walzen ist eine Hochglanzstahlkühlwalze und die andere Walze ist eine Walze mit einer Hochglanzgummioberfläche, dabei wird die Folie gekühlt. Die so erhaltenen Folien sind zwischen 25 und 250 Micron (10⁻⁶ m) dick.

EP 294 705 (Röhm GmbH) beschreibt ein Verfahren zur Herstellung beidseitig geglätteter Folien, das als ein Glättelement eine bereits geglättete Folie, die in den Verfahren vorher erzeugt und rückgeführt wird, verwendet.

EP 916 474 (General Electric Company) beschreibt die Herstellung eines einseitig mit einer UV-härtbaren Beschichtung beschichteten Polycarbonat (PC)-Films. Eine Seite des PC-Films ist texturiert. Der Film hat geringe Doppelbrechung und hohe Transmission, da die Brechungsindices von Film und Beschichtung einander angepasst werden.

EP 916 475 (General Electric Company) beschreibt die Herstellung von Folien aus thermoplastischen Materialien mit polierten Oberflächen und einer Doppelbrechung von weniger als 25 µm. Dies wird durch ein Glättwerk aus einer Metallrolle und einer mit Polytetrafluorethylen beschichten Walze erreicht. Die Polytetrafluorethylen-Beschichtung wird auf eine Gummierung aufgetragen.

WO 96/40 480 (Avery Derrison Corp.) beschreibt ein Extrusionsbeschichtungsverfahren. Hierbei wird auf eine Hilfsfolie (12) im Walzenspalt ein optisch klares Material aufextrudiert. Der Verbund wird anschließend noch mit einem polymerisierten, weiteren Material beschichtet. Durch das Extrusionsbeschichtungsverfahren mit anschließender Pigmentierung erspart man sich den Lackierungsschritt, der mit Lösungsmittelemissionen verbunden ist.

Eine zweite gefärbte Schicht kann entweder auf den Verbund coextrudiert oder aus einer Lösung gegossen werden.

Auf Seite 373, Abbildung 11.5 des Buchs von Friedhelm Hensen (Ed.) "Plastics Extrusion Technology" (2. Auflage, Hanser, (1997)) wird ein Extrusion-coating-Prozeß beschrieben, wie er auch in der WO 96/40 480 beschrieben wird.

In DE 198 130 01 wird eine schlagzäh ausgerüstete PMMA-Formmasse gemäß DE 195 44 563 zu einer oberflächenharten, im "In-Mould-Film-Decoration"-Verfahren verarbeitbarer hochglänzenden und praktisch gelkörperfreien Folie verarbeitet. Die Schmelze wird mittels Extruder erzeugt, über eine Flexlippendüse dem erfindungsgemäßen Glättwerk zugeführt, welches zur Erzeugung besonders hoher Zuhaltekräfte im Walzenspalt ausgelegt ist. Die Glättwalzen sind bombiert. Die Folien werden zur Oberflächendekoration hochwertiger thermoplastischer Formteile eingesetzt. Wegen der hohen Zuhaltekräfte im Walzenspalt erhält man Folien mit extrem hoher Orientierung.

Die Dokumente JP 07117124 und US 5 772 944 offenbaren weitere Verfahren zur Herstellung von Folien.

### Aufgabe und Lösung

Es bestand die Aufgabe, ein einfaches und kostengünstiges Extrusionsverfahren für Folien zu entwickeln, mit dem man in der Lage ist, Folien aus thermoplastischen Materialien in einem Dickenbereich von 20 µm bis 1.000 µm mit anwendungsorientierter Oberflächengestaltung, wie beispielsweise glänzend, eingefärbt, eingefärbt, mattiert, UV-absorbierend oder lichtstreuend herzustellen, wobei die Folienseiten eine unterschiedliche Texturierung aufweisen können. Die Folien sollen eine hohe mechanische Belastbarkeit aufweisen.

Die Aufgabe wird gelöst durch ein Verfahren zur Herstellung von Folien gemäß Anspruch 1.

Durch die Abstimmung der Weite des Düsenspalts, der Foliendicke und des Quotienten der Folienbahngeschwindigkeit im nachfolgenden Glättspalt oder im nachfolgenden Andruckspalt geteilt durch die Folienbahngeschwindigkeit im Glättspalt, der durch das Walzenpaar (1, 2), wird eine niedrige molekulare Orientierung der resultierenden Folien erreicht, die entscheidend zur hohen mechanischen Festigkeit, insbesondere auch transversal zur Extrusionsrichtung, beiträgt.

### Figuren

Die Erfindung wird durch die folgenden Figuren erläutert, soll aber nicht auf diese Ausführungsformen beschränkt sein

### Bezugszeichen

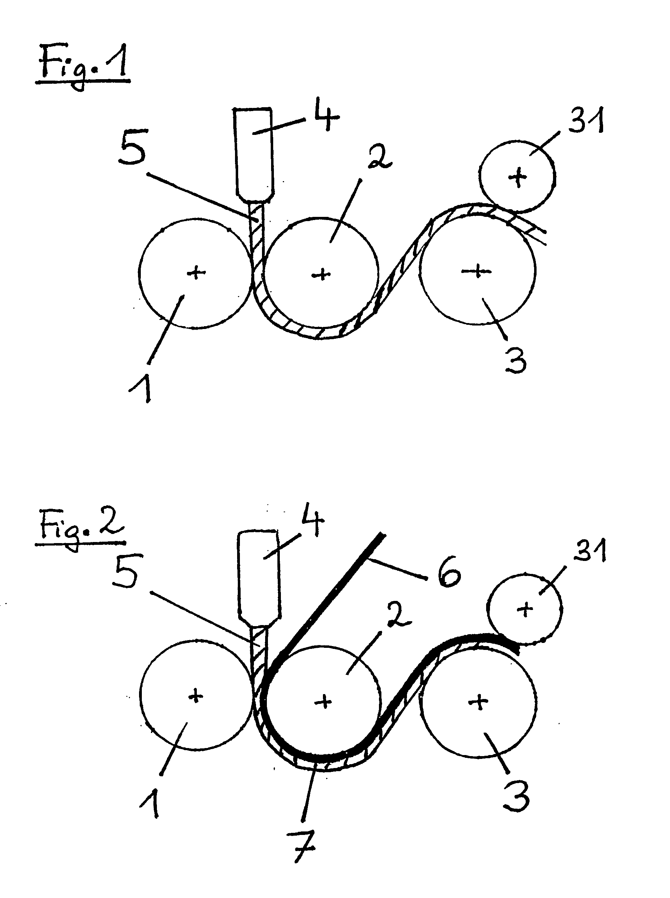

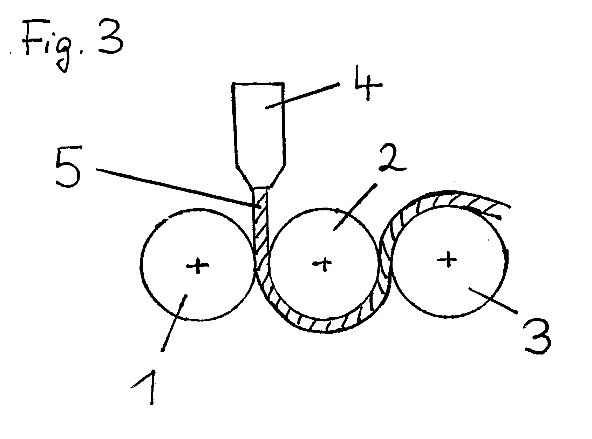

Figur 1: Erfindungsgemäße Anordnung mit vier Walzen, quer zur Extrusionsrichtung betrachtet.
   1 = zweite Glättwerkwalze z. B. mit elastischer Oberfläche aus Silikon
   2 = erste Glättwerkwalze z. B. mit Oberfläche aus poliertem Stahl
   3 = dritte Glättwerkwalze, die z. B. ausschließlich als Kühlwalze fungiert
   31 = vierte Walze, z. B. mit elastisch beschichteter Oberfläche, die als Andruckwalze fungiert.
   4 = Folien-Extrusionsdüse
   5 = Schmelzefilm (z. B. aus schlagzäh modifiziertem Polymethylmethacrylat)
Figur 2: Erfindungsgemäße Anordnung mit vier Walzen zur Herstellung eines Laminats mit einer Polyethylentherephthalat-Folie, Bezugszeichen wie Fig. 1.
   6 = Polyethylentherephthalat-Folie
   7 = Laminat Folie (Polyethylentherephthalat mit z. B. schlagzäh modifiziertem Polymethylmethacrylat)
Fig. 3: Erfindungsgemäße Anordnung mit drei Walzen, wobei die Walze (3) mit der Walze (2) einen nachfolgenden Glättspalt bildet. Bezugszeichen wie Fig. 1.

### Ausführung der Erfindung

Die Erfindung betrifft ein Verfahren zur Herstellung von Folien im Dickenbereich von 20 µm - 1.000 µm, bevorzugt von 20µm - 750 µm , besonders bevorzugt von 20µm - 500 µm aus thermoplastischen Kunststoffen durch Extrusion des Kunststoffs durch eine Breitschlitzdüse und Glättung des aus der Breitschlitzdüse austretenden Schmelzefilms in einem Glättwerk, durch den der Schmelzefilm unter Druck hindurch geführt wird, bestehend aus mindestens drei Walzen, wobei ein erstes Walzenpaar (1, 2) einen Glättspalt zur Aufnahme des Schmelzefilms bildet und der Schmelzefilm hinter diesem Glättwerkspalt durch einen nachfolgenden Glättspalt oder einen nachfolgenden Andruckspalt geführt wird,
dadurch gekennzeichnet, daß
das Verhältnis der Weite des Düsenspalts und der Foliendicke nach dem folgenden Glättspalt oder Andruckspalt im Bereich von 1 : 1 bis 6 : 1, bevorzugt im Bereich von 1 : 1 bis 4 : 1, besonders bevorzugt im Bereich von 1 : 1 bis 3 : 1, insbesondere im Bereich von 1 : 1 bis 2 : 1, liegt und dass der Quotient der Folienbahngeschwindigkeit im nachfolgenden Glättspalt oder im nachfolgenden Andruckspalt geteilt durch die Folienbahngeschwindigkeit im Glättspalt, der durch das Walzenpaar (1, 2) gebildet wird, im Bereich von 0,8 bis 1, bevorzugt im Bereich von 0,85 bis 1, besonders bevorzugt im Bereich von 0,9 bis 1, liegt.

Die mittels eines Ein- oder Doppelschneckenextruders erzeugte Schmelze (zur Sicherstellung der Konstanz der Schmelzestroms können optional Schmelzepumpen eingesetzt werden) wird über eine für Folienextrusion ausgelegte Düse dem erfindungsgemäßen Formgebungsverfahren zugeführt.

Bevorzugt erfolgt zwischen der Schmelzepumpe und der Extrusionsdüse eine Schmelzefiltration. Die aus der Breite der Düse resultierende Folienbreite kann z. B. 1500 mm betragen. Die Weite des Düsenspalts bzw. die Düsenlippenöffnung kann z. B. 0,6 mm betragen. Die Temperaturen der Schmelze werden gemäß der üblichen Verarbeitungstemperaturen der verwendeten Werkstoffe gewählt. Die Schmelze wird im definierten Walzenspalt dimensioniert und durch die Oberfläche der temperierten Walzen geglättet und abgekühlt.

Das Glättwerk besteht insgesamt aus mindestens drei oder vier Walzen. Die beiden ersten Walzen bilden dabei einen Glättwerkspalt zur Aufnahme des Schmelzefilms, welcher aus der Breitschlitzdüse austritt. Die Breitschlitzdüse ist bevorzugt direkt über dem Glättwerkspalt angeordnet. Ein üblicher Abstand zwischen der Breitschlitzdüse und dem Glättwerkspalt kann z. B. 2 bis 20 cm betragen.

### Mögliche Walzenanordnungen und Oberfächenbeschaffenheiten

Beide Walze des Walzenpaars (1, 2) können eine Oberfläche aus Stahl aufweisen.

Eine Walze des Walzenpaars (1, 2) kann eine Oberfläche aus Stahl aufweisen, während die andere Walze eine Oberfläche mit einer geringeren Härte als Stahl aufweisen kann. Die Walze mit einer Oberfläche aus Stahl eine strukturierte oder mattierte Stahloberfläche oder eine hochglanzpolierte Stahloberfläche mit einer Rautiefe der RA 0,002 - 0,006 bzw. RT = 0,02 - 0,04 gemessen nach DIN 4768 aufweisen. Eine der Walzen hat bevorzugt eine elastische thermostabile Oberfläche, zum Beispiel aus Silikonkautschuk oder Fluorkautschuk. Die Oberfläche dieser Walze kann glatt oder mattiert sein.

Die Walze mit einer Oberfläche mit einer geringeren Härte als Stahl kann eine Oberfläche aus einem elastischen, temperaturbeständigen Material mit einer Shore-A-Härte im Bereich von 30 bis 90 aufweisen.

Eine dritte Walze (3) kann zu einer der Walzen des Walzenpaars (1, 2) so eng benachbart sein, daß zwischen diesen Walzen ein Glättspalt gebildet wird, durch den der Schmelzefilm unter Druck hindurch geführt wird.

Eine dritte Walze (3) kann zu nächsten Walze des Walzenpaars (1, 2) so weit entfernt sein, daß zwischen diesen Walzen kein weiterer Walzenspalt gebildet wird und die dritte Walze mit einer Andruckwalze (31) einen Andruckspalt bildet, durch den der Schmelzefilm geführt wird.

Das Verhältnis der Weiten des Düsenspalts und der Foliendicke liegt im angegebenen Bereich, um eine molekulare Orientierung des Schmelzefilms in Maschinenrichtung (MD) durch die im Glättwerk auftretenden Liniendrücke gering zu halten. Bei einer angenommenen Weite des Düsenspalts von 0,6 mm liegt die Foliendicke demnach im Bereich von 0,6 bis 0,1 mm. Die im erfindungsgemäßen Verfahren resultierenden Liniendrücke im Glättwerkspalt liegen im Bereich von 50 N/cm bis 1500 N/cm.

Wenn eine Walze mit einer Oberfläche aus einem elastischen, temperaturbeständigen Material mit einer Shore-A-Härte im Bereich von 30 bis 90 eingesetzt wird, liegen die Liniendrücke im allgemeinen nicht höher als 300 N/cm.

Unter Weite des Düsenspalts versteht man den Abstand der Düsenlippen der Breitschlitzextrusionsdüse.

Dem ersten Walzenpaar schließt sich mindestens eine weitere dritte Walze (3) an. Dabei wird der aus dem Glättwerkspalt austretende Schmelzefilm auf diese Walze zum Zwecke der Kühlung und/oder der Formgebung angelegt bzw. umgelegt.

Die dritte Walze kann dabei zu einer der Walzen des Walzenpaars (1, 2) so eng benachbart sein, z. B. zur zweiten Walze (2), daß zwischen diesen Walzen ein weiterer Glättspalt gebildet wird, durch den der Schmelzefilm hindurch geführt wird. Die Walzen üben dabei in analoger Weise wie im ersten Glättspalt einen Druck auf den Schmelzfilm aus.

Die dritte Walze (3) kann zur nächsten Walze des Walzenpaars (1, 2) so weit entfernt sein, daß zwischen diesen Walzen kein weiterer Walzenspalt gebildet wird. In diesem Fall bildet die dritte Walze mit einer Andruckwalze (31) einen Andruckspalt, durch den der Schmelzefilm geführt wird. Die Andruckwalze ist in der Regel nicht angetrieben. Sie ist bevorzugt elastisch beschichtet und dient zur Sicherstellung einer Planlage der Folienbahn.

Neben der dritten Walze bzw. dritten und vierten Walze können gegebenenfalls weitere Walzen vorhanden sein, die den Schmelzefilm bzw. die Folie von der dritten Walzen übernehmen bzw. führen. Insbesondere bei dickeren Folien im Bereich von 400 Micrometer (µm) bis 1.000 Micrometer Dicke kann es sinnvoll sein, mehrere Kühlwalzen hintereinander zu verwenden.

Der Quotient der Folienbahngeschwindigkeit im nachfolgenden Glättspalt oder im nachfolgenden Andruckspalt geteilt durch die Folienbahngeschwindigkeit im Glättspalt, der durch das Walzenpaar (1, 2) gebildet wird, soll insbesondere gering sein, um eine Verstreckung des Schmelzefilms in Maschinenrichtung (MD) und eine damit verbundene molekulare Orientierung der Folie zu vermeiden.

Unter einer mattierten Walzenoberfläche versteht man eine Oberfläche, die so bearbeitet ist, dass eine gezielte, periodische Abweichung von der Hochglanzoberfläche auf der Folie induziert wird. Diese Walzen nennt man auch Prägewalzen. Bei einer Stahlwalze lässt sich eine feinmatte Oberfläche z. B. durch Elektrogravieren, Lasergravieren oder Sandstrahlen einer vormals glatten Oberfläche bereitstellen.

Die Temperaturen der Schmelze werden gemäß der üblichen Verarbeitungstemperaturen der verwendeten Werkstoffe gewählt.

Mit dem erfindungsgemäßen Verfahren sind beispielsweise folgende Folien-Varianten realisierbar:
- Folien mit beidseitig glatter Oberfläche,
- Folien mit einer glatten und einer mattierten bzw. strukturierten Oberfläche
- Folien mit beidseitig mattierter bzw. strukturierter Oberfläche

Die Folien können allgemein auch coextrudiert oder laminiert sein.

### Geeignete thermoplastische Kunststoffe

Als thermoplastisches Werkstoffe für die Folien kommen folgende Materialien in Frage.

Polymethylmethacrylat (PMMA), schlagzäh modifiziertes PMMA (sz-PMMA), Blends aus PMMA oder aus sz-PMMA und Fluor-Polymer, z. B. Polyvinylidenfluorid (PVDF), wobei das Mischungsverhältnis zwischen PMMA oder sz-PMMA und PVDF z. B. zwischen 10 : 90 und 90 : 10 Gewichtsteilen betragen kann. Unter Fluor-Polymeren sind im Rahmen der vorliegenden Erfindung Polymere zu verstehen, die durch die radikalische Polymerisation von olefinisch ungesättigten Monomeren erhalten werden können, an deren Doppelbindung sich mindestens ein Fluor-Substituent befindet. Hierbei sind auch Copolymere eingeschlossen. Diese Copolymere können neben einem oder mehreren fluorenthaltenden Monomeren weitere Monomere enthalten, die mit diesen fluorenthaltenden Monomeren copolymerisierbar sind.

Zu den fluorenthaltenden Monomeren gehören unter anderem Chlortrifluorethylen, Fluorvinylsulfonsäure, Hexafluorisobutylen, Hexafluorpropylen, Perfluorvinylmethylether, Tetrafluorethylen, Vinylfluorid und Vinylidenfluorid. Von diesen ist Vinylidenfluorid besonders bevorzugt.

Weitere geeignete Thermoplaste sind z. B. Acrylnitril-Butadien-Styrol-Copolymere (ABS), Acrylnitril-Styrol-Acrylester- Copolymere (ASA), Methylmethacrylat-modifiziertes ABS (MABS), schlagzähes Polystyrol (sz PS), PETG (amorphes Polyethylentherephthalat), Polycarbonat (PC).

### Laminat-Folien

In einer besonderen Ausführungsform wird ein Laminat mit einer Polyethylentherephthalat-Folie (z. B. Mylar®-Folie, Dupont-Teijin) oder einer Polypropylen-Folie hergestellt. Eine erste Walze aus hochglanzpoliertem Stahl und eine zweite Walze mit elastischer Oberfläche, z. B. aus Silikonkautschuk, bilden den Glättspalt. In diesen wird ein Schmelzefilm aus z. B. Polymethylmethacrylat, einem schlagzäh modifiziertem Polymethylmethacrylat oder einem Polymethylmethacrylat/Polyvinylidenfluorid-Blend extrudiert, wobei auf der Seite der zweite Walze mit elastischer Oberfläche gleichzeitig eine Polyethylentherephthalat-Folie von z. B. 50 µm Dicke hindurchgeführt wird, Das resultierende Laminat, das z. B. 100 µm Gesamtdicke aufweisen kann, wird über eine dritte Walze, die der zweiten Walze benachbart ist und als Kühlwalze fungiert, geführt und dabei abgekühlt. Die dritte Walze bildet in diesem Fall mit einer Andruckwalze (31) einen Andruckspalt, durch den der abgekühlte Schmelzefilm geführt wird.

Das Laminat kann nachträglich wieder getrennt werden. Die entstehende Folie weist dann auf der Seite, wo sich die PET- oder Polypropylen-Folie befand, eine hochglänzende Oberfläche auf.

### Prüfmethoden

Die Vorteile der erfindungsgemäßen Folien können unter anderem durch folgende Meßgrößen, die z. B. teilweise auch parallel und senkrecht zur Extrusionsrichtung gemessen werden können, charakterisiert werden.

E-Modul, Zugfestigkeit und Reißdehnung wurden geprüft nach ISO 527-3, die Einspannlänge betrug 60 mm, die Prüfgeschwindigkeit 50 mm/min.

Die Pencil-Hardness kann entsprechend der ASTM D 3363-92 a ermittelt werden.

Der Glanzgrad kann bei 60° entsprechend der DIN 67530 gemessen werden.

Der "Haze" kann entsprechend der ASTM D 1003 gemessen werden. Bezüglich der Berechnung der "Surface-Haze" wurde die Trübung der Folie nach beidseitiger Siliconölbehandlung von der im unbehandelten Zustand gemessenen Trübung abgezogen.

Schrumpfmessung: Es wird der "Totale Rückschrumpf' bestimmt.
Hierzu wird ein 100 x 100 mm Probekörper 30 min bei 160 °C getempert.

Der Rückschrumpf (thermische Relaxation) ist definiert als die Maßänderung des Probekörpers (gemessen jeweils bei Raumtemperatur), die durch dessen Schrumpfung bei Erwärmung auf eine bestimmte Temperatur verursacht wird. Sie wird bestimmt als prozentualer Rückschrumpf des Abstandes zweier Markierungen auf dem Probekörper, bezogen auf deren Abstand im ungeschrumpften Zustand.

### Vorteilhafte Wirkungen

Die erfindungsgemäßen Folien weisen eine vergleichsweise geringe Orientierung der Polymermoleküle auf, was in vorteilhaften mechanischen Eigenschaften resultiert.

Die Folien zeichnen sich durch einen geringen Schrumpf, geringe Dickentoleranz und isotrope mechanische Eigenschaften aus. Die Oberflächenqualität (geringe Fischaugen/Gelkörperanzahl) ist hoch.

### Verwendungsmöglichkeiten

Die Folien ermöglichen eine große mögliche Bandbreite bezüglich der anwendungsorientierten Gestaltung der Oberfläche, wie beispielsweise: Glänzend, eingefärbt, mattiert (geprägt), mattiert (partikelmodifiziert), UV-absorbierend, lichtstreuend.

Die Folien sind somit für eine Vielzahl von Anwendungen geeignet und können z. B. in Verfahren zur Herstellung von Dekorfolien, UV-Schutzfolien, Trockenlackfolien, Verkratzschutzfolien für optische Datenträger, sowie Datenträgermaterialien, welche mittels kontinuierlichen Bedruckverfahren wie Tiefdruck, Flexodruck, Offset-Druck, Digitaldruck, Rollensiebdruck, Transferdruckverfahren bedruckt werden und/oder in kontinuierlichen Laminier- und Kaschierverfahren, wie Foliencolamination, Kaschierung von thermoplastischen Platten- und Profilwerkstoffen, Ummantelungstechniken, Coil-Coating-Verfahren und/oder kontinuierlichen Beschichtungsverfahren, wie wasserspreitende Beschichtung, antibakterielle Beschichtung, selbstreinigende Beschichtung, Antigraffiti-Beschichtung, Kratzfestbeschichtung, elektrisch leitfähige Beschichtung, optional verbunden mit Prägeverfahren, verarbeitet werden.

Die oben beschriebene besondere Ausführungsform einer Laminatfolie aus Polyethylentherephthalat-Folie oder Polypropylen-Folie mit Polymethylmethacrylat, schlagzäh modifiziertem Polymethylmethacrylat oder Polymethylmethacrylat/Polyvinylidenfluorid-Blend zeichnet sich durch eine hohe mechanische und thermische Festigkeit aus. Die Laminatfolie eignet sich somit zur Weiterverarbeitung unter hoher mechanischer und/oder thermischer Belastung, wie sie z. B. bei Druck- oder Beschichtungsprozessen auftreten können. Das Risiko eines Bahnrisses oder eines Anklebens an Führungswalzen ist gegenüber den Folien des Standes der Technik deutlich vermindert.

### Allgemeines Beispiel zur Folienherstellung

Die Herstellung einer Folie aus schlagzäh modifiziertem Polymethylmethacrylat kann z. B. wie folgt ausgeführt werden.

Es kann z. B. eine schlagzäh modifizierte Polymethylmethacrylat-Formmasse folgenden Aufbaus eingesetzt werden. Die Herstellung einer solchen schlagzähen Formmasse ist z. B. aus der DE 38 42 796 C2 bekannt. Es handelt sich um ein zweischaliges Polymerisat einer inneren Zähphase aus 99 Gew.-% Butylacrylat und 1 Gew.-% Allylmethacrylat und einer äußeren Hartphase aus 96 Gew.-% Methylmethacrylat und 4 Gew.-% Butylacrylat. Der Schlagzähmodifizierer wird als Formmasse zu gleichen Gewichtsteilen gemeinsam mit einer Polymethylmethacrylat-Matrix Formmasse aus 96 Gew.-% Methylmethacrylat und 4 Gew.-% Methylacrylat zu einer Folie extrudiert.

### Folienextrusionanlage

Die eingesetzte Formmasse wird in einem Einschneckenextruder geschmolzen und einer Foliendüse zugeführt. Dort wird die Schmelze in die Breite verteilt. Die Breite der Foliendüse kann z. B. 1500 mm betragen. Die Weite der Foliendüse kann z. B. 0,4 mm betragen. Die Temperatur der austretenden Schmelze beträgt ca. 250 °C. Die Foliendüse ist senkrecht über einem Glattwerkwalzenpaar angeordnet. Eine der Walzen (2) hat eine hochglanzpolierte Stahloberfläche, die andere Walze (1) hat eine mattierte Oberfläche aus Silikonkautschuk. Die Walzen haben einen Durchmesser von 400 mm. Die beiden Walzen sind auf eine Temperatur von 80 °C temperiert. Die Dicke der Folie beträgt 0,15 mm. Die im Glättwerkspalt auftretenden Liniendrücke werden an einer Meßeinrichtung der Extrusionsanlage angezeigt und liegen im Bereich von ca. 100 N/cm. Die Folienbahn wird auf der Seite der Walze mit der hochglanzpolierten Oberfläche aus Stahl über eine dritte Walze mit einem Durchmesser von 250 mm geleitet, die etwa 300 mm entfernt ist. Die dritte Walze ist auf eine Temperatur von 60 °C temperiert. Die dritte Walze bildet mit einer vierten Walze einen Andruckspalt. Die vierte Walze hat einen Durchmesser von 140 mm.

Der Quotient der Folienbahngeschwindigkeit im Andruckspalt geteilt durch die Folienbahngeschwindigkeit im Glättspalt, der durch das Walzenpaar (1, 2) gebildet wird, liegt bei 0,98.

Die Folienbahn wird anschließend über mehrere Stützrollen geführt und im vollständig abgekühlten Zustand auf eine Rolle gewickelt.

Die erhaltene einseitig mattierte Folienbahn ist von hoher Qualität in Bezug auf die Isotropie der mechanischen Eigenschaften, der Dickentoleranz, dem Schrumpf und der Gelkörperanzahl.

## Patentansprüche

1. Verfahren zur Herstellung von Folien im Dickenbereich von 20 µm-1.000 µm aus thermoplastischen Kunststoffen durch Extrusion des Kunststoffs durch eine Breitschlitzdüse und Glättung des aus der Breitschlitzdüse austretenden Schmelzefilms in einem Glättwerk, durch den der Schmelzefilm unter Druck hindurch geführt wird, bestehend aus mindestens drei Walzen, wobei ein erstes Walzenpaar (1, 2) einen Glättspalt zur Aufnahme des Schmelzefilms bildet und der Schmelzefilm hinter diesem Glättwerkspalt durch einen nachfolgenden Glättspalt oder einen nachfolgenden Andruckspalt geführt wird,
**dadurch gekennzeichnet, daß**
das Verhältnis der Weite des Düsenspalts und der Foliendicke nach dem nachfolgenden Glättspalt oder Andruckspalt im Bereich von 1 : 1 bis 6 : 1 liegt und daß der Quotient der Folienbahngeschwindigkeit im nachfolgenden Glättspalt oder im nachfolgenden Andruckspalt geteilt durch die Folienbahngeschwindigkeit im Glättspalt, der durch das Walzenpaar (1. 2) gebildet wird, im Bereich von 0,8 bis 1 liegt.

2. Verfahren nach Anspruch 1, **dadurch gekennzeichnet, daß** beide Walzen des Walzenpaars (1, 2) eine Oberfläche aus Stahl aufweisen.

3. Verfahren nach Anspruch 1, **dadurch gekennzeichnet, daß** eine Walze des Walzenpaars (1, 2) eine Oberfläche aus Stahl aufweist, während die andere Walze eine Oberfläche mit einer geringeren Härte als Stahl besitzt.

4. Verfahren nach Anspruch 2 oder 3, **dadurch gekennzeichnet, daß** die Walze mit einer Oberfläche aus Stahl eine strukturierte oder mattierte Stahloberfläche oder eine hochglanzpolierte Stahloberfläche mit einer Rautiefe der RA 0,002 - 0,006 bzw. RT = 0,02 - 0,04 gemessen nach DIN 4768 aufweist.

5. Verfahren nach Anspruch 3, **dadurch gekennzeichnet, daß** die Walze mit einer Oberfläche mit geringerer Härte als Stahl eine Oberfläche aus einem elastischen, temperaturbeständigen Material mit einer Shore-A-Härte im Bereich von 30 bis 90 aufweist.

6. Verfahren nach einem oder mehreren der Ansprüche 1 bis 5, **dadurch gekennzeichnet, daß** eine dritte Walze (3) zu einer der Walzen des Walzenpaars (1, 2) so eng benachbart ist, daß zwischen diesen Walzen ein Glättspalt gebildet wird, durch den der Schmelzefilm unter Druck hindurch geführt wird.

7. Verfahren nach einem oder mehreren der Ansprüche 1 bis 5, **dadurch gekennzeichnet, daß** eine dritte Walze (3) zur nächsten Walze des Walzenpaars (1, 2) so weit entfernt ist, daß zwischen diesen Walzen kein weiterer Walzenspalt gebildet wird und die dritte Walze mit einer Andruckwalze (31) einen Andruckspalt bildet, durch den der abgekühlte Schmelzefilm geführt wird.

8. Verfahren nach einem oder mehreren der Ansprüche 3 bis 7, **dadurch gekennzeichnet, daß** man auf der Seite der Walze, die eine Oberfläche mit einer geringeren Härte als Stahl besitzt, eine Polyethylentherephthalat-Folie oder eine Potypropylen-Folie in den Walzenspalt führt und ein Laminat mit dem extrudierten Folienmaterial erzeugt.

9. Verfahren nach Anspruch 8, **dadurch gekennzeichnet, daß** man eine Laminat-Folie (7) aus Polyethylentherephthalat-Folie (6) und Polymethylmethacrylat oder schlagzäh modifiziertem Polymethylmethacrylat erzeugt.

10. Verfahren nach Anspruch 8, **dadurch gekennzeichnet, daß** man eine Laminat-Folie (7) aus Polyethylentherephthalat-Folie und einem Polymethylmethacrylat/Polyvinylidenfluorid-Blend erzeugt.

## Claims

1. Process for producing films in the thickness range from 20 µm to 1 000 µm from thermoplastics through extrusion of the plastic through a slot die and smoothing the melt film emerging from the slot die in a polishing stack through which the melt film is passed under pressure, composed of at least three rollers, where a first roller pair (1, 2) forms a polishing nip to receive the melt film and, downstream of this polishing stack nip, the melt film is passed through a subsequent polishing nip or through a subsequent pressure nip,
**characterized in that**
the ratio between the width of the die gap and the film thickness after the subsequent polishing nip or pressure nip is in the range from 1 : 1 to 6 : 1, and **in that** the quotient obtained by dividing the film web speed in the subsequent polishing nip or in the subsequent pressure nip by the film web speed in the polishing nip formed by the roller pair (1, 2) is in the range from 0.8 to 1.

2. Process according to Claim 1, **characterized in that** both rollers of the roller pair (1, 2) have a surface made from steel.

3. Process according to Claim 1, **characterized in that** one roller of the roller pair (1, 2) has a surface made from steel, while the other roller has a surface whose hardness is lower than that of steel.

4. Process according to Claim 2 or 3, **characterized in that** the roller with a surface made from steel has a structured or matted steel surface or has a high-gloss-polished steel surface with a roughness depth of RA 0.002 - 0.006 or, respectively, RT = 0.02 - 0.04, measured to DIN 4768.

5. Process according to Claim 3, **characterized in that** the roller with a surface whose hardness is lower than that of steel has a surface made from an elastic, heat-resistant material whose Shore-A hardness is in the range from 30 to 90.

6. Process according to one or more of Claims 1 to 5, **characterized in that** a third roller (3) is so closely adjacent to one of the rollers of the roller pair (1, 2) as to form, between these rollers, a polishing nip through which the melt film is passed under pressure.

7. Process according to one or more of Claims 1 to 5, **characterized in that** a third roller (3) is so far distant from the nearest roller of the roller pair (1, 2) that no further roller nip is formed between these rollers, the third roller, forming, with a pressure roller (31), a pressure nip through which the cooled melt film is passed.

8. Process according to one or more of Claims 3 to 7, **characterized in that** a polyethylene terephthalate film or a polypropylene film is passed into the roller nip on the side of the roller with a surface whose hardness is lower than that of steel, producing a laminate with the extruded film material.

9. Process according to Claim 8, **characterized in that** a laminate film (7) is produced from polyethylene terephthalate film (6) and polymethyl methacrylate or impact-modified polymethyl methacrylate.

10. Process according to Claim 8, **characterized in that** a laminate film (7) is produced from polyethylene terephthalate film and a polymethyl methacrylate/polyvinylidene fluoride blend.

## Revendications

1. Procédé de fabrication de feuilles d'une épaisseur de l'ordre de 20 µm à 1 000 µm en matières synthétiques thermoplastiques, par extrusion de la matière synthétique par une filière à large fente et lissage du film fondu qui sort de la filière à large fente dans un mécanisme de lissage que le film fondu traverse sous pression et qui est constitué d'au moins trois cylindres, une première paire de cylindres (1, 2) formant un interstice de lissage qui reçoit le film fondu et le film fondu étant guidé en aval de cet interstice du mécanisme de lissage par un interstice de lissage suivant ou un interstice de compression suivant,
**caractérisé en ce que**
le rapport entre la largeur de la fente de l'ajutage et l'épaisseur du film après l'interstice de lissage ou l'interstice de compression est compris dans la plage de 1 : 1 à 6 : 1 et **en ce que** le quotient entre la vitesse de la nappe de film dans l'interstice de lissage suivant ou dans l'interstice de compression suivant, divisé par la vitesse de la nappe de film dans l'interstice de lissage formé par la paire de cylindres (1, 2), est compris dans la plage de 0,8 à 1.

2. Procédé selon la revendication 1, **caractérisé en ce que** les deux cylindres de la paire de cylindres (1, 2) ont une surface en acier.

3. Procédé selon la revendication 1, **caractérisé en ce qu'**un cylindre de la paire de cylindres (1, 2) présente une surface en acier tandis que l'autre cylindre a une surface dont la dureté est plus basse que celle de l'acier.

4. Procédé selon les revendications 2 ou 3, **caractérisé en ce que** le cylindre dont la surface est en acier présente une surface d'acier structurée ou mate ou une surface d'acier polie à un brillant élevé, avec une profondeur de rugosité RA 0,002 - 0,006 ou RT = 0,02 - 0,04 mesurée selon la norme DIN 4768.

5. Procédé selon la revendication 3, **caractérisé en ce que** le cylindre dont la surface a une dureté plus basse que celle de l'acier a une surface en un matériau élastique résistant aux hautes températures et dont la dureté Shore A est comprise dans la plage de 30 à 90.

6. Procédé selon l'une ou plusieurs des revendications 1 à 5, **caractérisé en ce qu'**un troisième cylindre (3) est voisin de l'un des cylindres de la paire de cylindres (1, 2) de manière suffisamment étroite pour qu'entre ces cylindres se forme un interstice de lissage à travers lequel le film fondu est guidé sous pression.

7. Procédé selon l'une ou plusieurs des revendications 1 à 5, **caractérisé en ce qu'**un troisième cylindre (3) est éloigné du cylindre suivant de la paire de cylindres (1, 2) suffisamment loin pour qu'aucun interstice ne soit formé entre ces cylindres, le troisième cylindre formant avec un cylindre de poussée (31) un interstice de compression à travers lequel le film fondu refroidi est guidé.

8. Procédé selon l'une ou plusieurs des revendications 3 à 7, **caractérisé en ce que** sur le côté du cylindre qui a une surface dont la dureté est plus basse que celle de l'acier, on guide une feuille de poly(téréphtalate d'éthylène) ou une feuille de polypropylène dans l'interstice entre les cylindres et on forme un stratifié avec le matériau en feuille extrudé.

9. Procédé selon la revendication 8, **caractérisé en ce que** l'on produit une feuille stratifiée (7) constituée d'une feuille (6) de poly(téréphtalate d'éthylène) et de poly(méthacrylate de méthyle) ou de poly(méthacrylate de méthyle) modifié de manière à résister aux chocs.

10. Procédé selon la revendication 8, **caractérisé en ce que** l'on produit une feuille stratifiée (7) constituée d'une feuille (6) de poly(téréphtalate d'éthylène) et d'un mélange de poly(méthacrylate de méthyle) et de poly(fluorure de vinylidène).
